# EUROPÄISCHE PATENTSCHRIFT

(11) **EP 3 486 539 B1**
(45) Veröffentlichungstag und Bekanntmachung des Hinweises auf die Patenterteilung: **09.03.2022**
(21) Anmeldenummer: 18206834.6
(22) Anmeldetag: 16.11.2018
(51) Int. Cl.: F16L 9/18

(54) **KRAFTSTOFFROHRLEITUNGSELEMENT FÜR FLÜSSIGKEITSLEITUNGEN**
FUEL PIPING ELEMENT FOR LIQUID LINES
ÉLÉMENT DE TUYAUTERIE DE CARBURANT POUR CONDUITES DU LIQUIDE

(30) Priorität: 20.11.2017 DE 102017127305
(43) Veröffentlichungstag der Anmeldung: 22.05.2019
(73) Patentinhaber: AT-Tec Attendorner Tube-Tec GmbH, 57439 Attendorn (DE)
(72) Erfinder: Ostermann, Thomas, 57439 Attendorn (DE)
(74) Vertreter: Kalkoff & Partner Patentanwälte mbB

(56) Entgegenhaltungen:
- WO-A1-03/095886
- DE-A1-102008 015 143
- DE-A1-102014 100 347
- FR-A1- 2 293 652
- JP-A- 2007 040 474
- US-A1- 2005 006 899

## Beschreibung

### Kraftstoffrohrleitungselement für Flüssigkeitsleitungen

Die Erfindung betrifft ein Kraftstoffrohrleitungselement für Flüssigkeitsleitungen, mit einem Außenrohr, das
- einen Verbindungsabschnitt und
- einen im Innern des Außenrohrs in einem Verbindungsabschnitt angeordneten Innenkörper
aufweist.

Rohrleitungselemente der eingangs genannten Art werden bspw. im Kraftfahrzeugbereich dazu verwendet, um einen Kraftstoffspeicher mit einer Zuführeinheit zu verbinden, wobei die Zuführeinheit dazu ausgebildet ist, um die Verbrennungsräume eines Kraftfahrzeugmotors mit Kraftstoff zu versorgen. Das Rohrleitungselement als Bestandteil einer Flüssigkeitsleitung bietet dann bspw. die Möglichkeit zur Anordnung eines zuführenden Schlauchs und ist darüber hinaus zur Verbindung mit der Zuführeinheit ausgebildet. Darüber hinaus kann das Rohrleitungselement jedoch auch in beliebigen anderen flüssigkeitsführenden Systemen als Bestandteil der Flüssigkeitsleitung eingesetzt werden.

Bei den bekannten Rohrleitungselementen wird sowohl das Strömungsverhalten wie auch der Volumenstrom durch den Innenquerschnitt des Außenrohres festgelegt. Das sich durch den Innenquerschnitt ergebende Volumen bestimmt im Falle der Verwendung des Rohrleitungselements zur Zuführung von Kraftstoff im Kraftfahrzeug auch, wieviel Kraftstoff nach einem Abschaltvorgang in dem den Brennräumen vorgelagerten System verbleibt. Bei einem Neustart des Fahrzeugs wird dieser verbliebene Kraftstoff zusätzlich verbraucht. Insbesondere bei modernen Verbrennungsmotoren mit automatischen Abschalteinrichtungen hat dies zur Folge, dass aufgrund einer Vielzahl von Abschaltvorgängen im täglichen Betrieb eine erhebliche Menge an Kraftstoff ungenutzt verbrannt wird.

Die WO 03/095886 A1 zeigt eine Dämpfungseinrichtung für die Dämpfung von Schwingungen und Pulsationen in Fluidsystemen.

Der Einsatz einer Pumpe zur vorherigen Absaugung des überflüssigen Kraftstoffs führt nicht zum gewünschten Erfolg, nachdem aufgrund des Volumens des Rohrleitungselements die Betriebsdauer einer solchen Pumpe einen derart hohen Energiebedarf aufweisen würde, dass sich die durch die Absaugung ergebende Kraftstoffeinsparung aufgehoben werden würde oder es sogar zu einem erhöhten Kraftstoffverbrauch zum Betrieb der Pumpe kommen würde.

Hiervon ausgehend liegt der Erfindung die Aufgabe zugrunde, ein Kraftstoffrohrleitungselement bereitzustellen, welches einerseits ein ausreichend großes Volumen aufweist, um einen ausreichend großen Volumenstrom bereitzustellen, andererseits jedoch die Möglichkeit bietet, in einfacher Weise im Bedarfsfall Flüssigkeit energiesparend aus dem Rohrleitungselement zu entfernen, bspw. mit einer Pumpe abzusaugen.

Die Erfindung löst die Aufgabe durch ein Kraftstoffrohrleitungselement mit den Merkmalen des Anspruchs 1. Vorteilhafte Weiterbildungen der Erfindung sind in den abhängigen Ansprüchen angegeben.

Das Kraftstoffrohrleitungselement weist ein Außenrohr auf, welches erfindungsgemäß einen Verbindungsabschnitt und einen Pufferabschnitt besitzt. Der Verbindungsabschnitt des Außenrohres erstreckt sich dabei in Längsachsenrichtung des Außenrohres und bezeichnet den Abschnitt des Außenrohres, über den sich ein in dem Außenrohr angeordneter Innenkörper ebenfalls in Längsachsenrichtung des Außenrohres erstreckt. An den Verbindungsabschnitt schließt sich in Längsachsenrichtung der Pufferabschnitt an, bei dem es sich um den Abschnitt des Außenrohres handelt, welcher in Längsachsenrichtung des Außenrohres betrachtet nicht von dem Innenkörper überdeckt ist. Dies wird dadurch erreicht, dass der Innenkörper kürzer ist als das Außenrohr.

Aufgrund seiner Anordnung des Innenkörpers im Inneren des Außenrohres bestimmt der Innenkörper erfindungsgemäß den Strömungskanal entlang des Verbindungsabschnittes, wobei durch den Innenkörper der Querschnitt des Strömungskanals - senkrecht zur Längsachse betrachtet - im Bereich des Verbindungsabschnitts kleiner ist als der entsprechende Querschnitt im Bereich des Pufferabschnitts, der sich stirnseitig an den Innenkörper anschließt.

Die erfindungsgemäße Ausgestaltung des Kraftstoffrohrleitungselement bewirkt eine Reduzierung des durch das Außenrohr bereitgestellten Innenvolumens des Rohrleitungselements durch Einbringung des Innenkörpers in das Außenrohr, wobei gleichzeitig durch eine Beibehaltung des Innenquerschnitts des Außenrohres im Bereich des Pufferabschnitts ein ausreichend großer Speicherraum geschaffen wird, welcher zur Vorhaltung einer im Bedarf erforderlichen Flüssigkeitsmenge, bspw. Kraftstoffmenge geeignet ist. Die Verwendung eines Innenkörpers zur Reduzierung des Strömungskanals im Bereich des Verbindungsabschnitts zeichnet sich dabei dadurch aus, dass dieser in einfacher Weise eine Festlegung des Strömungskanals innerhalb des Außenrohres ermöglicht, wobei sich die Herstellung besonders kostengünstig durch eine einfache Einbringung des Innenkörpers in das Außenrohr realisieren lässt.

Die Ausgestaltung des Innenraums des Außenrohres im Bereich des Pufferabschnitts ist grundsätzlich frei wählbar. Erfindungsgemäß ist vorgesehen, dass der Pufferabschnitt eine umfangsseitig durch den Innendurchmesser des Außenrohres begrenzte Pufferkammer aufweist. Gemäß dieser Ausgestaltung der Erfindung schließt sich die Pufferkammer in Längsachsenrichtung des Außenrohres direkt an den Innenkörper an und ist in Umfangsrichtung durch die Innenwandung des Außenrohres begrenzt. Über die Länge des über den Innenkörper hinausragenden Bereichs des Außenrohres wird dabei die Größe der Pufferkammer in Längsachsenrichtung des Außenrohres bestimmt. Die Ausgestaltung der Pufferkammer gemäß dieser Weiterbildung der Erfindung erfordert mit Ausnahme der Anordnung des Innenkörpers innerhalb des Außenrohres keine weitere Bearbeitung.

Weiter erfindungsgemäß ist vorgesehen, dass das Kraftstoffrohrleitungselement eine Biegung aufweist, wobei besonders bevorzugt der Innenkörper derart im Bereich der Biegung endet, dass die Pufferkammer eine keilförmige Gestalt aufweist.

Dabei ist der Innenkörper gemeinsam mit dem Außenrohr durch einen Biegeprozess verformt. Der Innenkörper stützt dabei das Außenrohr, sodass bei einer den Biegeprozess berücksichtigenden Dimensionierung des Außenrohres Materialeinsparungen gegenüber solchen zu biegenden Außenrohren vorgenommen werden können, welche keinen Innenkörper aufweisen.

Bei der erfindungsgemäßen Anordnung des Innenkörpers derart, dass dieser im Bereich der Biegung endet, wird eine keilförmige Pufferkammer gebildet, welche in besonders zuverlässiger Weise einen ausreichend großen Speicherraum darstellt, welcher in Strömungsrichtung im Bedarfsfall ein ausreichend großes Volumen zur Verfügung stellt.

Erfindungsgemäß liegt der Innenkörper dabei an der Innenfläche das Außenrohres an. Denkbar ist die Verwendung eines Vollkörpers mit außenseitig in Längsachsenrichtung verlaufenden Nuten, welche im montierten Zustand, in dem der Innenkörper an der Innenfläche des Außenrohres anliegt, die Strömungskanäle mit der Innenfläche des Außenrohres ausbilden.

Das Kraftstoffrohrleitungselement ist grundsätzlich dazu geeignet, um als Bestandteil einer Flüssigkeitsförderleitung mit weiteren Elementen der Flüssigkeitsförderleitung verbunden zu werden. So kann das Rohrleitungselement bspw. mit geeigneten Verbindungselementen ausgestaltet sein, die eine flüssigkeitsdichte Verbindung mit entsprechenden Anschlusselementen ermöglichen. Auch kann das Rohrleitungselement dazu genutzt werden, um mit einem Abschnitt einer Schlauchleitung verbunden zu werden, wobei hierzu die Schlauchleitung über das Außenrohr geführt wird.

Nach einer vorteilhaften Weiterbildung der Erfindung ist vorgesehen, dass das Rohrleitungselement eine außenseitig umlaufende Wulst aufweist, wobei die Wulst besonders bevorzugt durch plastische Verformung des Außenrohres, insbesondere durch Stauchen des Außenrohres gebildet ist. Eine außenseitig umlaufende Wulst ermöglicht eine besonders zuverlässige Anordnung eines Schlauchelements, wobei dieses insbesondere in Aufschubrichtung des Schlauchelements hinter dem Wulst formschlüssig arretiert werden kann. Durch den Wulst wird somit die Verbindung eines Schlauchelements mit dem Rohrleitungselement besonders zuverlässig ausgestaltet, wobei die Herstellung des Wulsts grundsätzlich in beliebiger Weise erfolgen kann.

So kann der Wulst bspw. durch einen Materialauftrag auf der Außenfläche des Außenrohres gebildet werden. Nach einer besonders vorteilhaften Ausgestaltung der Erfindung ist der Wulst jedoch durch plastische Verformung des Außenrohres, insbesondere durch ein Stauchen des Außenrohres in Längsachsenrichtung gebildet, was den Vorteil bietet, dass auf eine Verbindung eines separaten Wulstelements mit dem Außenrohr verzichtet werden kann. Auch stellt das Stauchen einen besonders einfachen und kostengünstigen Herstellungsprozess dar. Ein möglicher Nachteil des Stauchprozesses, welcher aufgrund der Verformung zu einer Einschnürung im entsprechenden Bereich an der Innenseite des Außenrohres führt, wird bei dem erfindungsgemäßen Kraftstoffrohrleitungselement zudem dadurch vermieden, dass bei einer geeigneten Ausgestaltung des Innenkörpers die Einschnürung keine Einwirkung auf den Strömungskanal hat, wenn die Stauchung im Bereich des Verbindungsabschnitts des Außenrohres angeordnet ist.

Nach einer weiteren Ausgestaltung der Erfindung ist vorgesehen, dass sich das Außenrohr einenends verjüngt und/oder anderenends einen umlaufenden Flansch aufweist. Diese Ausgestaltung der Erfindung ermöglicht bspw. bei der Ausgestaltung eines sich verjüngenden Endes eine einfache Montage eines Schlauchelements an dem Rohrleitungselement. Die Ausgestaltung eines Flansches ermöglicht darüber hinaus eine zuverlässige Festlegung des Rohrleitungselements an bspw. einer Versorgungseinheit, welche einen Kraftfahrzeugmotor mit Kraftstoff versorgt.

Nach einer besonders vorteilhaften Ausgestaltung der Erfindung ist jedoch vorgesehen, dass der Innenkörper durch ein an der Innenseite des Außenrohres anliegendes Innenrohr gebildet ist. Diese Ausgestaltung der Erfindung ermöglicht eine besonders einfache und kostengünstige Herstellung eines erfindungsgemäßen Rohrleitungselements, wobei über den Innenquerschnitt des Innenrohres der Querschnitt des Strömungskanals besonders einfach bestimmt werden kann. Darüber hinaus weist die Verwendung eines Innenrohres den Vorteil auf, dass dieses im Falle einer bevorzugten Biegung des Rohrelements, eine dabei auftretende, durch Streckung hervorgerufene Materialreduzierung auf einer Seite der Biegung ausgleicht. Das im Bereich des Verbindungsabschnitts zweischalige Rohrleitungselement weist eine hohe Stabilität auf.

Ausführungsbeispiele der Erfindung werden nachstehend mit Bezug auf die Zeichnungen näher erläutert. In den Zeichnungen zeigen:
- Fig. 1: eine Ansicht eines Schnitts einer ersten Ausführungsform eines Kraftstoffrohrleitungselement mit einem als Innenrohr ausgebildeten Innenkörper;
- Fig. 2: eine Ansicht eines Schnitts eines Bereichs des Rohrleitungselements von Fig. 1 im Bereich einer Biegung;
- Fig. 3: eine perspektivische Ansicht des Rohrleitungselements von Fig. 1;
- Fig. 4: eine zweite Ausführungsform eines Kraftstoffrohrleitungselement mit einem als Vollkörper ausgebildeten Innenkörper und

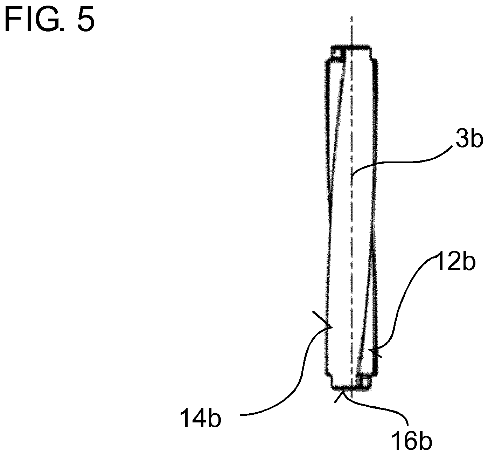

- Fig. 5: eine Ansicht des Innenkörpers von Fig. 4.

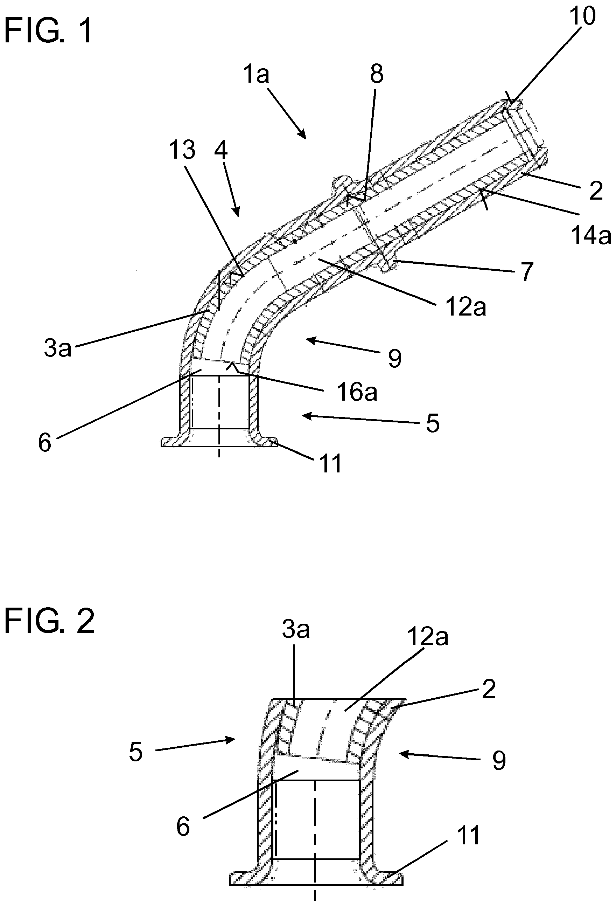

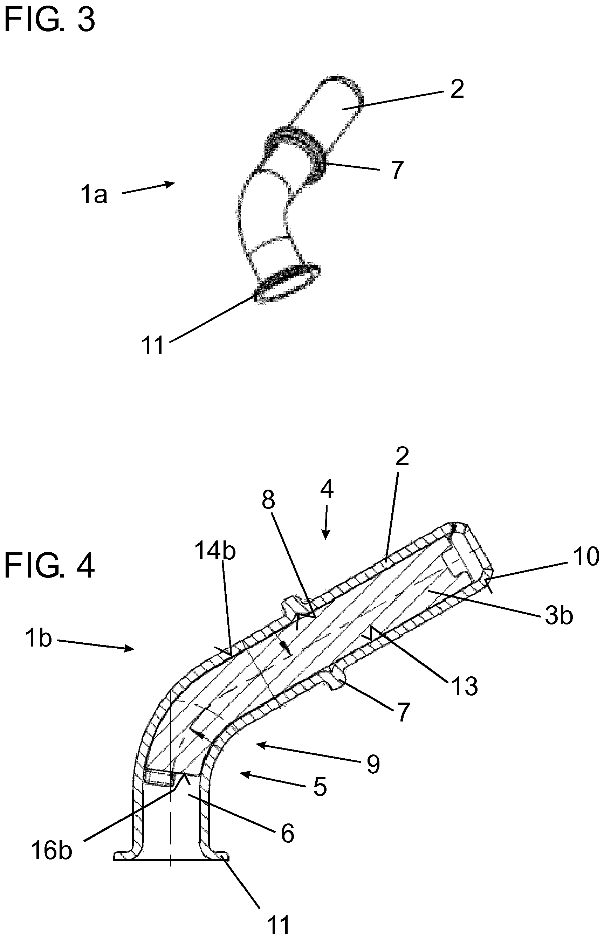

Die in Figur 1 und 3 dargestellte erste Ausführungsform eines Kraftstoffrohrleitungselement 1a ist aus einem Außenrohr 2 und einem als Innenrohr 3a ausgebildeten Innenkörper gebildet, wobei das Innenrohr 3a mit seiner Außenseite 14a an einer Innenseite 13 des Außenrohres 2 anliegt. Im Überdeckungsbereich des Außenrohres 2 mit dem Innenrohr 3a bildet das Rohrleitungselement 3a einen Verbindungsabschnitt 4 aus, an dem sich in Längsachsenrichtung in Richtung auf das einen Flansch 11 aufweisenden Endes des Außenrohres 2 eine Pufferkammer 6 anschließt, welche im Bereich eines Pufferabschnitts 5 des Außenrohres 2 angeordnet ist.

Zur Erleichterung der Montage und Festlegung eines hier nicht dargestellten Schlauchs an dem Kraftstoffrohrleitungselement 1a weist das Außenrohr 2 einen durch Stauchen gebildeten Wulst 7 sowie an seinem dem Flansch 11 gegenüberliegenden Ende eine Verjüngung 10 auf. Der Wulst 7 ist durch Stauchen gebildet. Eine sich durch das Stauchen des Außenrohres 2 gebildete Einschnürung 8 an der Innenseite 13 des Außenrohres 2 hat keinen Einfluss auf das Strömungsverhalten einer das Rohrleitungselement 1a durchströmenden Flüssigkeit, nachdem der Strömungskanal 12a durch den Innenquerschnitt des Innenrohres 3a bestimmt wird.

Das Kraftstoffrohrleitungselement 1a weist darüber hinaus eine Biegung 9 auf, wobei das Innenrohr 3a derart angeordnet ist, dass dieses im Bereich der Biegung 9 endet, sodass eine keilförmige Pufferkammer 6 gebildet wird, die sich direkt an eine Stirnseite 16a des Innenrohres 3a anschließt (vgl. Figur 1 und 2).

Eine zweite Ausführungsform eines Kraftstoffrohrleitungselement 1b ist in Figur 4 dargestellt. Im Gegensatz zu dem in Figur 1 dargestellten Rohrleitungselement 1a ist der Innenkörper durch eine Innenstange 3b gebildet, welche zwei sich schraubenförmig an der Außenseite der Innenstange 3b erstreckende Strömungskanäle 12b aufweist, welche in der montierten Lage durch die Innenseite 13 des Außenrohres 2 abgegrenzt werden. Im übrigen Bereich liegt die Innenstange 3b mit ihrer Außenseite 14b an der Innenseite 13 des Außenrohres 2 an. Wie auch bei dem Rohrleitungselement 1a so schließt sich an die Stirnseite 16b der Innenstange 3b eine Pufferkammer 6 an, die ebenfalls keilförmig ausgebildet ist, nachdem die Innenstange 3b im Bereich der Biegung 9 endet.

### Bezugszeichenliste

- 1a, 1b: Kraftstoffrohrleitungselement
- 2: Außenrohr
- 3a, 3b: Innenkörper (Innenrohr/Innenstange)
- 4: Verbindungsabschnitt
- 5: Pufferabschnitt
- 6: Pufferkammer
- 7: Wulst
- 8: Einschnürung
- 9: Biegung
- 10: Verjüngung
- 11: Flansch
- 12a, 12b: Strömungskanal
- 13: Innenseite Außenrohr
- 14a, 14b: Außenseite Innenkörper (Innenrohr/Innenstange)
- 16a, 16b: Stirnseite Innenkörper (Innenrohr/Innenstange)

## Patentansprüche

1. Kraftstoffrohrleitungselement für Flüssigkeitsleitungen zur Verbindung eines Kraftstoffspeichers mit einer die Verbrennungsräume eines Kraftfahrzeugmotors mit Kraftstoff versorgenden Zuführeinheit, mit einem Außenrohr (2), und einem im Innern des Außenrohrs (2) in einem Verbindungsabschnitt (4) angeordneten Innenkörper (3a, 3b),
**dadurch gekennzeichnet, dass**
- ein an den Verbindungsabschnitt (4) angrenzender, als Speicherraum zur Vorhaltung einer im Bedarf erforderlichen Kraftstoffmenge ausgebildeter Pufferabschnitt (5) vorgesehen ist,
- der Pufferabschnitt (5) einen umfangsseitig durch den Innendurchmesser des Außenrohrs (2) begrenzte Pufferkammer (6) aufweist,
- der Innenkörper (3a, 3b) an der Innenfläche des Außenrohrs (2) anliegt und
- das Kraftstoffrohrleitungselement (1a, 1b) eine Biegung (9) aufweist und der Innenkörper (3a, 3b) derart im Bereich der Biegung (9) endet, dass die Pufferkammer (6) eine keilförmige Gestalt aufweist.

2. Kraftstoffrohrleitungselement nach Anspruch 1 oder 2, **gekennzeichnet durch** eine außenseitig umlaufende Wulst (7), die besonders bevorzugt durch plastische Verformung des Außenrohrs (2), insbesondere Stauchen des Außenrohrs (2) gebildet ist.

3. Kraftstoffrohrleitungselement nach einem oder mehreren der vorhergehenden Ansprüche, **dadurch gekennzeichnet, dass** sich das Außenrohr (2) einenends verjüngt und/oder anderenends einen umlaufenden Flansch (11) aufweist.

4. Kraftstoffrohrleitungselement nach einem oder mehreren der vorhergehenden Ansprüche, **dadurch gekennzeichnet, dass** der Innenkörper (3a, 3b) durch ein an der Innenseite (13) des Außenrohrs (2) anliegendes Innenrohr (3a) gebildet ist.

## Claims

1. A fuel piping element for liquid lines for connecting a fuel accumulator to a supply unit that supplies the combustion chambers of a motor vehicle engine with fuel, comprising an external pipe (2) and an internal body (3a, 3b) arranged in a connection portion (4) inside the external pipe (2),
**characterized in that**
- a buffer portion (5) is provided, which adjoins the connection portion (4) and is designed as a storage space for holding a quantity of fuel required when needed,
- the buffer portion (5) comprises a buffer chamber (6), which is circumferentially delimited by the inner diameter of the external pipe (2),
- the internal body (3a, 3b) abuts the inner surface of the external pipe (2), and
- the fuel piping element (1a, 1b) comprises a bend (9) and the internal body (3a, 3b) ends in the region of the bend (9) such that the buffer chamber (6) is wedge-shaped.

2. The fuel piping element according to claim 1 or 2, **characterized by** an externally circumferential bulge (7), which is particularly preferably formed by means of plastic deformation of the external pipe (2), in particular upsetting of the external pipe (2).

3. The fuel piping element according to one or more of the preceding claims, **characterized in that** the external pipe (2) is tapered at one end and/or has a circumferential flange (11) at the other end.

4. The fuel piping element according to one or more of the preceding claims, **characterized in that** the internal body (3a, 3b) is formed by an internal pipe (3a) that abuts the inner face (13) of the external pipe (2).

## Revendications

1. Élément de tuyauterie de carburant pour conduites de liquide, pour le raccordement d'un réservoir de carburant à une unité d'alimentation approvisionnant les chambres de combustion d'un moteur de véhicule automobile en carburant, comprenant un tuyau extérieur (2), et un corps intérieur (3a, 3b) disposé dans une section de raccordement (4) à l'intérieur du tuyau extérieur (2),
**caractérisé en ce que**
- il est prévu une section de tampon (5) conçue comme une chambre de stockage pour la mise à disposition d'une quantité de carburant nécessaire en cas de besoin, adjacente à la section de raccordement (4),
- la section de tampon (5) présente une chambre tampon (6) délimitée circonférentiellement par le diamètre intérieur du tuyau extérieur (2),
- le corps intérieur (3a, 3b) s'applique sur la surface intérieure du tuyau extérieur (2) et
- l'élément de tuyauterie de carburant (la, 1b) présente une courbure (9) et le corps intérieur (3a, 3b) se termine de telle façon dans la région de la courbure (9), que la chambre tampon (6) présente une forme de coin.

2. Élément de tuyauterie de carburant selon la revendication 1 ou 2, **caractérisé par** un bourrelet périphérique côté extérieur (7), lequel est particulièrement préférentiellement formé par déformation plastique du tuyau extérieur (2), en particulier par refoulement du tuyau extérieur (2).

3. Élément de tuyauterie de carburant selon l'une ou plusieurs des revendications précédentes, **caractérisé en ce que** le tuyau extérieur (2) se rétrécit à une extrémité et/ou présente un bride périphérique (11) à l'autre extrémité.

4. Élément de tuyauterie de carburant selon l'une ou plusieurs des revendications précédentes, **caractérisé en ce que** le corps intérieur (3a, 3b) est formé par un tuyau intérieur (3a) s'appliquant sur le côté intérieur (13) du tuyau extérieur (2).
